# EUROPÄISCHE PATENTSCHRIFT

(11) **EP 1 633 518 B1**
(45) Veröffentlichungstag und Bekanntmachung des Hinweises auf die Patenterteilung: **04.04.2007**
(21) Anmeldenummer: 04734659.8
(22) Anmeldetag: 25.05.2004
(51) Int. Cl.: B23D 25/12, B23D 33/02, B21D 43/28

(54) **VORRICHTUNG ZUM QUERTEILEN EINES WALZBANDES**
DEVICE FOR TRANSVERSALLY CUTTING A ROLLED STRIP
DISPOSITIF DE CISAILLAGE A COUPE TRANSVERSALE D'UNE BANDE DE LAMINAGE

(30) Priorität: 12.06.2003 DE 10326383
(43) Veröffentlichungstag der Anmeldung: 15.03.2006
(73) Patentinhaber: SMS Demag Aktiengesellschaft, 40237 Düsseldorf (DE)
(72) Erfinder: BÄUMER, Klaus, 57223 Kreuztal (DE); MERZ, Jürgen, 57223 Kreuztal (DE)
(74) Vertreter: Klüppel, Walter
(86) Internationale Anmeldenummer: PCT/EP2004/005582
(87) Internationale Veröffentlichungsnummer: WO 2004/110688

(56) Entgegenhaltungen:
- DE-B- 1 270 368
- GB-A- 477 076
- GB-A- 1 221 599
- US-A- 5 191 818

## Beschreibung

Die Erfindung betrifft eine Vorrichtung zum Querteilen eines Walzbandes durch eine Schere, insbesondere beim Querteilen unter Einsatz einer Trommelschere, bei der eine Lücke zwischen dem Ende des Rollgangs vor der Schere und dem Anfang des Rollgangs hinter der Schere, bei welchem keine Unterstützung des Walzbandes vorliegt, durch ein schwenkbares, das Walzband beim Durchlaufen stützendes, Rollgangsteil verkleinert wird.

Eine Vorrichtung gemäß dem Oberbegriff von Anspruch 1 ist aus der DE 12 70 368 bekannt.

Scheren zum Querteilen von Walzband in einer Warmbreitbandstraße, in einer Kalt-Tandem-Straße, in Warm- oder Kaltwalzwerken sind allgemein bekannt. Zum Einsatz kommen dabei bevorzugt Kurbel- und Trommelscheren. Ausgestaltungen von Trommelscheren sind z.B. in der DE 199 53 906 A1 und in der DE 100 01 928 A1 beschrieben.

Die DE 12 70 368 beschreibt eine Kurbelschere für Walzstahl bei der ein Transportrollgang im Bereich des Messerkreises eine Lücke aufweist. Ein annähernd Messerbreite aufweisendes und mit annähernd halbkreisförmig gebogener Mantelfläche versehenes, drehbares Transportsegment, schließt in der oberen Stellung die Lücke im Transportrollgang.

Nachteilig bei den bekannten Ausführungen einer solchen Vorrichtung zum Querteilen von Walzband ist, dass der Abstand der Auflagepunkte / -linien des Walzbandes vor und hinter der Schere durch ein hereindrehbares Transportsegment zwar verkleinert wird, das Walzband aber, abhängig von der Dicke, der Oberflächenspannung usw., Abweichungen von der Walz- bzw. Transportrichtung durchführt. Durch die größeren Abstände zwischen den Auflagepunkten bzw. -linien wird der Bandlauf in der Vorrichtung zum Querteilen von Walzband gestört. Der Bandanfang reagiert sehr empfindlich auf diese größeren Abstände. Das Walzband kann sich in diesem Bereich nach oben oder unten orientieren und z.B. zwischen dem Transportsegment und dem Rollgang verkanten. Es kommt zum Stillstand der Vorrichtung. Die Gefahr wird größer, je dünner das Walzband ist.

Der Erfindung liegt daher die Aufgabe zugrunde, eine Vorrichtung zum Querteilen von Walzband zu schaffen, welche die obengannten Nachteile vermeidet.

Diese Aufgabe wird erfindungsgemäß durch eine Vorrichtung gemäß Anspruch 1 gelöst.

Von Vorteil ist, wenn zwischen dem Ende des vorderen Rollganges und dem schwenkbaren Rollgangsteil ein weiterer beweglicher, mit dem schwenkbaren Rollgangsteil verzahnter, Führungstisch angeordnet ist. Die Lücke im Rollgang ist dann vollständig geschlossen.

Eine vorteilhafte Ausgestaltung der Erfindung sieht vor, dass die obere Trommel und die untere Trommel am Außenumfang Abflachungen aufweisen. Hierdurch wird eine größere Durchlauföffnung für das Walzband geschaffen und beim Einfädeln des Walzbandes bilden die Trommeln, speziell die obere Trommel, keine Hindernisse, an denen das Walzband gestoppt wird.

Von Vorteil ist auch, dass vor der oberen Trommel ein beweglicher Abweiser angeordnet ist. Hierdurch wird ein Einlauftrichter für das Walzband vorgegeben, wodurch ein Ausweichen des Walzbandes nach oben verhindert wird.

Weitere Ausgestaltungen der erfindungsgemäßen Vorrichtung ergeben sich aus den Unteransprüchen.

Ein Ausführungsbeispiel der Erfindung wird anhand von sehr schematischen Zeichnungen näher beschrieben. Es zeigen:
- Fig. 1: eine Vorrichtung zum Querteilen von Walzband in Einfädelsposition vom Bandanfang; und
- Fig. 2: eine Vorrichtung nach Fig. 1 in Schneidposition.

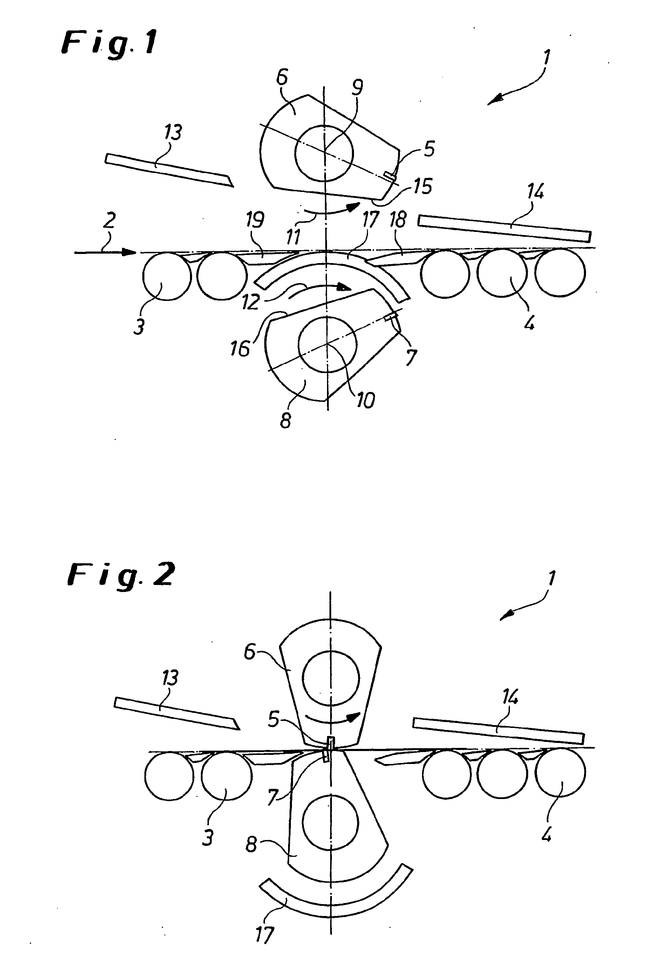

Fig. 1 zeigt eine Vorrichtung 1 zum Querteilen von Walzband 2 mit einem vorderen Rollgang 3 und einem hinteren Rollgang 4. Die Teilung des Walzbandes 2 erfolgt durch ein oberes Messer 5, welches an einer oberen Trommel 6 befestigt ist, und einem unteren Messer 7, welches an einer unteren Trommel 8 befestigt ist. Die Trommeln 6, 8 drehen sich gegensinnig um eine obere Drehachse 9 und einer unteren Drehachse 10. Die Drehrichtung ist durch Pfeile 11, 12 dargestellt.

Oberhalb des vorderen Rollganges 3 befindet sich ein beweglicher Abweiser 13. Oberhalb des hinteren Rollganges 4 befindet sich ein fester oder beweglicher Abweiser 14.

Die Trommeln 6, 8 werden beim Einfädeln so gedreht, dass die Abflachungen 15, 15', 16, 16', speziell die Abflachung 15 an der oberen Trommel 6 ,so ausgerichtet sind, dass sie zusammen mit dem beweglichen Abweiser 13 einen Einlauftrichter bilden.

Damit das Walzband 2, welches auf dem vorderen Rollgang 3 aufliegt, sicher auf den hinteren Rollgang 4 gelangt, wird ein schwenkbares Rollgangsteil 17 in eine Lücke gedreht. Dabei bewegt sich das schwenkbare Rollgangsteil 17 um die untere Trommel 8. Um die Lücke vollständig zu schließen werden bewegliche Führungstische 18, 19 zwischen dem schwenkbaren Rollgangsteil 17 und dem vorderen Rollgang 3 sowie dem schwenkbaren Rollgangsteil 17 und dem hinteren Rollgang 4 angeordnet. Zum vollständigen Schließen der Lücke werden der schwenkbare Rollgangsteil 17 und die beweglichen Führungstische 18, 19 miteinander verzahnt.

In Fig. 2 ist das Walzband 2 sowie die Trommeln 6, 8 mit den Messern 5, 7 zu sehen. Die Messer 5, 7 befinden sich jetzt in einer Schneidposition. Dazu werden die obere Trommel 6 mit dem oberen Messer 5 und die untere Trommel 8 mit dem unteren Messer 7 gegensinnig um die obere Drehachse 9 und die untere Drehachse 10 gedreht. Hierzu wurde das schwenkbare Rollgangsteil 17 aus der Rollgangslücke weggedreht.

Zur Vermeidung von Beschädigungen des schwenkbaren Rollgangteiles 17 durch beispielsweise nach unten fallende Reststücke des Walzbandes 2, wird das schwenkbare Rollgangsteil 17 so gedreht, dass es durch die untere Trommel 8 verdeckt wird.

Zusätzlich können die beweglichen Führungstische 18, 19 dem Kreisbogen, welchen das untere Messer 7 überdeckt, ausweichen. Dieses geschieht beispielsweise durch eine lineare seitliche Bewegung oder eine Drehbewegung.

### Bezugszeichenübersicht

- 1: Querteilungsvorrichtung
- 2: Walzband
- 3: vorderer Rollgang
- 4: hinterer Rollgang
- 5: oberes Messer
- 6: obere Trommel
- 7: unteres Messer
- 8: untere Trommel
- 9: obere Drehachse
- 10: untere Drehachse
- 11: Drehrichtung obere Trommel
- 12: Drehrichtung untere Trommel
- 13: beweglicher Abweiser
- 14: fester Abweiser
- 15, 15': Abflachung obere Trommel
- 16, 16': Abflachung untere Trommel
- 17: schwenkbares Rollgangsteil
- 18: beweglicher Führungstisch
- 19: beweglicher Führungstisch

## Patentansprüche

1. Vorrichtung zum Querteilen eines Walzbandes (2) durch eine Schere, insbesondere beim Querteilen unter Einsatz einer Trommelschere, bei der eine Lücke zwischen dem Ende des Rollgangs (3) vor der Schere und dem Anfang des Rollgangs (4) hinter der Schere, bei welchem keine Unterstützung des Walzbandes vorliegt, durch ein schwenkbares, das Walzband beim Durchlaufen stützendes, Rollgangsteil (17) verkleinert wird,
**dadurch gekennzeichnet,**
**dass** zwischen dem schwenkbaren Rollgangsteil (17) und dem Anfang des hinteren Rollganges (4) ein beweglicher Führungstisch (18) angeordnet ist.

2. Vorrichtung nach Anspruch 1,
**dadurch gekennzeichnet,**
**dass** zwischen dem Ende des vorderen Rollganges (3) und dem schwenkbaren Rollgangsteil (17) ein beweglicher Führungstisch (19) angeordnet ist.

3. Vorrichtung nach Anspruch 1 oder 2,
**dadurch gekennzeichnet,**
**dass** die Mantelfläche des schwenkbaren Rollgangsteil (17) mit der Mantelfläche des beweglichen Führungstisches (18, 19) in Eingriff steht.

4. Vorrichtung nach einem der Ansprüche 1 bis 3,
**dadurch gekennzeichnet,**
**dass** die obere Trommel (6) und die untere Trommel (8) am Außenumfang Abflachungen (15, 15', 16, 16') aufweisen.

5. Vorrichtung nach einem der Ansprüche 1 bis 4,
**dadurch gekennzeichnet,**
**dass** vor der oberen Trommel (6) ein beweglicher Abweiser (13) angeordnet ist.

6. Vorrichtung nach einem der Ansprüche 1 bis 5,
**dadurch gekennzeichnet,**
**dass** hinter der oberen Trommel (6) ein fester oder ein beweglicher Abweiser (14) angeordnet ist.

## Claims

1. Device for cross-cutting a rolled strip (2) by a cutter, particularly in cross-cutting with use of a drum cutter, in which a gap between the end of the roller path (3) ahead of the cutter and the start of the roller path (4) behind the cutter, in which no support of the rolled strip is present, is reduced by a pivotable roller path part (17) supporting the rolled strip during transit, **characterised in that** a movable guide table (18) is arranged between the pivotable roller path part (17) and the start of the rear roller path (4).

2. Device according to claim 1, **characterised in that** a movable guide table (19) is arranged between the end of the front roller path (3) and the pivotable roller path part (17).

3. Device according to claim 1 or 2, **characterised in that** the circumferential surface of the pivotable roller path part (17) is disposed in engagement with the circumferential surface of the movable guide table (18, 19).

4. Device according to one of claims 1 to 3, **characterised in that** the upper drum (6) and the lower drum (8) have flattenings (15, 15', 16, 16') at the outer circumference.

5. Device according to one of claims 1 to 4, **characterised in that** a movable diverter (13) is arranged in front of the upper drum (6).

6. Device according to one of claims 1 to 5, **characterised in that** a fixed or movable diverter (14) is arranged behind the upper drum (6).

## Revendications

1. Dispositif pour la coupe transversale d'une bande laminée (2) par une cisaille, en particulier lors de la coupe transversale avec utilisation d'une cisaille à tambour, où un vide entre la fin du train de rouleaux (3) en amont de la cisaille et le début du train de rouleaux (4) en aval de la cisaille, dans lequel la bande laminée n'est pas soutenue, est réduit par une partie de train de rouleaux (17) pivotante, supportant la bande laminée lors de son passage, **caractérisé en ce qu'**une table de guidage (18) mobile est disposée entre la partie de train de rouleaux (17) pivotante et le début du train de rouleaux (4) en aval.

2. Dispositif selon la revendication 1, **caractérisé en ce qu'**une table de guidage (19) mobile est disposée entre la fin du train de rouleaux (3) en amont et la partie de train de rouleaux (17) pivotante.

3. Dispositif selon la revendication 1 ou 2, **caractérisé en ce que** la surface enveloppante de la partie de train de rouleaux (17) pivotante s'agrippe à la surface enveloppante de la table de guidage (18, 19) mobile.

4. Dispositif selon l'une quelconque des revendications 1 à 3, **caractérisé en ce que** le tambour supérieur (6) et le tambour inférieur (8) présentent des plats (15, 15', 16, 16') sur le pourtour extérieur.

5. Dispositif selon l'une quelconque des revendications 1 à 4, **caractérisé en ce qu'**un déflecteur (13) mobile est disposé en amont du tambour supérieur (6).

6. Dispositif selon l'une quelconque des revendications 1 à 5, **caractérisé en ce qu'**un déflecteur (14) fixe ou mobile est disposé en aval du tambour supérieur (6).
